# FASCICULE DE BREVET EUROPEEN

(11) **EP 1 739 942 B1**
(45) Date de publication et mention de la délivrance du brevet: **11.01.2012**
(21) Numéro de dépôt: 06300732.2
(22) Date de dépôt: 28.06.2006
(51) Int. Cl.: H04M 3/493

(54) **Mémorisation de données au cours d'un service vocal**
Speichern von Daten während eines Sprachdienstes
Memorisation of data during a voice service

(30) Priorité: 01.07.2005 FR 0552002; 01.07.2005 FR 0552003
(43) Date de publication de la demande: 03.01.2007
(73) Titulaire: FRANCE TELECOM, 75015 Paris (FR)
(72) Inventeur: LE BOHEC, Olivier, 35800, SAINT BRIAC SUR MER (FR); POULAIN, Gérard, 22560, PLEUMEUR BODOU (FR); LAUVERGNE, Muriel, 22560, TREBEURDEN (FR); CHARNAY, Laurent, 78180, MONTIGNY LE BRETONNEUX (FR)
(74) Mandataire: Lapoux, Roland

(56) Documents cités:
- US-A1- 2004 001 575
- US-A1- 2004 267 549
- US-B1- 6 788 768

## Description

La présente invention concerne une mémorisation de données au cours d'un service vocal interactif. Plus particulièrement, elle est relative à une mémorisation de données qui ont été transmises à un terminal d'usager par un serveur vocal dispensant un service vocal interactif.

Dans l'état de la technique, l'exploitation par un usager des nombreuses données transmises lors d'un service vocal est difficile. Par exemple, lors d'un service d'informations boursières, l'usager se souvient généralement avec difficulté du cours de bourse exact de la première action qu'il a demandé parmi des cours de dizaines d'actions consultés.

Il existe donc un besoin pour l'usager du service vocal d'accéder à des informations qui lui ont déjà été transmises et qu'il est susceptible d'avoir oubliées.

Par ailleurs, des serveurs dispensant un service vocal interactif échangent des messages avec des terminaux d'usager afin d'établir un dialogue avec l'usager de chaque terminal connecté au serveur. Le dialogue est prévu pour être établi avec un seul usager à la fois dans un environnement sans bruit. Par conséquent, au cours du dialogue, une intervention imprévue d'autres usagers, une quinte de toux ou des rires de l'usager, à titre d'exemples, engendrent d'éventuelles erreurs d'interprétation par le serveur vocal.

La demande de brevet US 2004/0267549 concerne un système dispensant un service vocal pour aider des vendeurs à fournir des informations sur des biens immobiliers à inscrire dans un catalogue et des clients à accéder aux informations du catalogue fournies par les vendeurs. En particulier, un serveur d'application pose des questions à un vendeur et mémorise des réponses du vendeur. Ultérieurement, un client peut accéder à des informations de catalogue précédemment mémorisées et fournies par le vendeur au serveur d'application. Le serveur d'application ne mémorise pas des données d'un dernier message vocal fourni par le serveur au vendeur ou au client à la demande de ce dernier et le vendeur ou le client ne peut pas accéder à des données d'un message vocal qui lui ont été précédemment fournies par le serveur.

Pour remédier aux inconvénients précités, un procédé selon l'invention pour mémoriser des données vocales transmises à un terminal d'usager par un serveur dispensant un service vocal interactif, comprenant dans le serveur une étape d'identifier le terminal d'usager par un identificateur de terminal, est caractérisé en ce qu'il comprend dans le serveur les étapes de :
déterminer une commande de mémorisation en fonction de chaque message d'usager transmis par le terminal d'usager au serveur,
mémoriser des données d'un dernier message vocal mémorisé et transmis préalablement au terminal d'usager en correspondance avec l'identificateur de terminal si une commande de mémorisation est déterminée,
déterminer une commande d'écoute de données mémorisées en fonction de chaque message d'usager transmis par le terminal d'usager au serveur, et
transmettre un message vocal incluant les données mémorisées du dernier message vocal au terminal d'usager si la commande d'écoute est déterminée.

L'invention facilite ainsi une exploitation par un usager d'un terminal, de données vocales transmises par un serveur vocal au terminal, afin notamment d'éviter des questions répétitives par le terminal d'usager au serveur vocal lorsque l'usager souhaite réécouter des données vocales déjà transmises.

Pour chaque message d'usager transmis par le terminal d'usager au serveur, le procédé peut comprendre une étape de déterminer un indicateur de données à mémoriser en fonction du message d'usager, et une étape de mémoriser au moins une donnée identifiée par l'indicateur de données à mémoriser déterminé en correspondance avec l'identificateur de terminal. L'étape de mémoriser les données du dernier message vocal transmis est réalisée en outre si aucun indicateur de données à mémoriser n'est déterminé.

L'usager du terminal peut indiquer une ou plusieurs données qu'il souhaite mémoriser. Par défaut, en l'absence d'indicateur de données à mémoriser, les données du dernier message sont tout de même mémorisées.

Dans le procédé de l'invention sont également prévues une mise en pause du service vocal interactif dispensé par le serveur échangeant des messages avec un terminal d'usager, puis une reprise du service vocal.

Ainsi selon une autre caractéristique de l'invention, une commande de mémorisation est déterminée à la suite d'une commande de mise en pause déterminée dans ledit chaque message d'usager transmis par le terminal d'usager au serveur et une commande d'écoute est déterminée à la suite d'une commande de reprise de service détectée dans un autre message d'usager transmis par le terminal d'usager au serveur.

Cette caractéristique permet de disposer d'un contrôle de mise en pause du service vocal afin d'adapter le déroulement du dialogue aux situations réelles d'utilisation du service vocal et d'éviter une divergence non souhaitée par l'usager dans le déroulement du dialogue.

Selon une autre caractéristique de l'invention, la commande de mise en pause déterminée entraîne une inhibition de traitements de tout message d'usager n'engendrant pas une commande de reprise de service, et la commande de reprise de service détectée entraîne une activation des traitements de message d'usager afin de transmettre un message vocal au terminal d'usager. L'invention s'affranchit ainsi de bruits fortuits et paroles locales non destinées au serveur au cours du dialogue entre le terminal d'usager et le serveur vocal.

L'invention offre avantageusement une fonctionnalité supplémentaire qui facilite l'interaction entre le serveur et un usager du terminal qui peut mettre en pause le service vocal à tout instant, notamment en cas de perturbation du dialogue par un bruit ambiant autour du terminal.

Une seule commande de reprise est détectable pour activer les traitements de message d'usager afin de diminuer la complexité des actions nécessaires à la reprise du service vocal.

En outre dans le serveur, l'inhibition des traitements de messages d'usager, comme l'interprétation de ceux-ci afin de ne pas transmettre de messages vocaux au terminal pendant la pause du service vocal, conduit à un accroissement de ressources du serveur pour des échanges notamment avec d'autres terminaux.

L'invention a aussi pour objet un serveur dispensant un service interactif pour mémoriser des données vocales transmises à un terminal d'usager, comprenant un moyen pour identifier le terminal d'usager par un identificateur de terminal. Le serveur est caractérisé en ce qu'il comprend
un moyen pour déterminer une commande de mémorisation en fonction de chaque message d'usager transmis par le terminal d'usager au serveur,
un moyen pour mémoriser des données d'un dernier message vocal mémorisé et transmis préalablement au terminal d'usager en correspondance avec l'identificateur de terminal si une commande de mémorisation est déterminée,
un moyen pour déterminer une commande d'écoute de données mémorisées en fonction de chaque message d'usager transmis par le terminal d'usager au serveur, et
un moyen pour transmettre un message vocal incluant les données mémorisées du dernier message vocal au terminal d'usager si la commande d'écoute est déterminée .

Enfin, l'invention se rapporte à un programme d'ordinateur apte à être mis en oeuvre dans un serveur pour mémoriser des données transmises à un terminal d'usager par ledit serveur, ledit programme comprenant des instructions qui, lorsque le programme est chargé et exécuté sur ledit serveur, réalisent les étapes selon le procédé de l'invention.

D'autres caractéristiques et avantages de la présente invention apparaîtront plus clairement à la lecture de la description suivante de plusieurs réalisations préférées de l'invention, données à titre d'exemples non limitatifs, en référence aux dessins annexés correspondants dans lesquels :
- la figure 1 est un bloc-diagramme schématique d'un système de télécommunications entre au moins un terminal d'usager et un serveur vocal mémorisant des données transmises à un terminal d'usager et dispensant un service vocal interactif selon l'invention ;
- la figure 2 est un algorithme d'un procédé selon une réalisation de l'invention pour mémoriser des données transmises au terminal d'usager par le serveur vocal dispensant un service vocal interactif ; et
- la figure 3 est un algorithme du procédé de l'invention selon une autre réalisation relative en outre à une mise en pause du service vocal interactif dispensé par le serveur vocal.

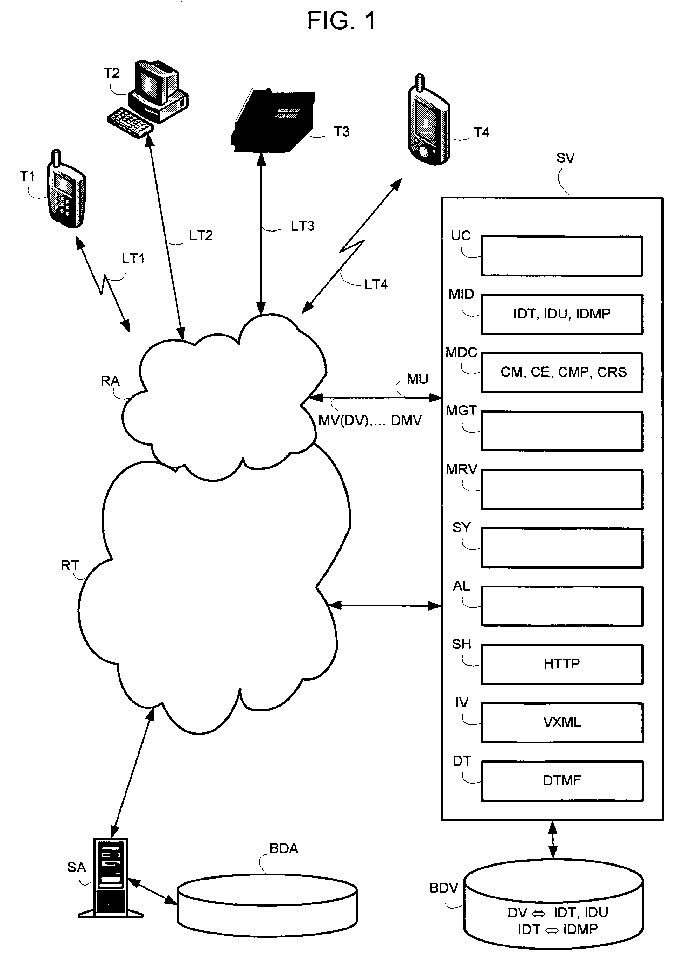

En référence à la figure 1, le **système de télécommunications** comprend un serveur vocal SV, une base de données vocales BDV en relation avec le serveur vocal, au moins un terminal d'usager tel qu'un terminal d'usager T1, T2, T3 ou T4 et éventuellement un serveur applicatif SA en relation avec une base de données applicatives BDA.

Les serveurs SV et SA gérant les bases de données BDV et BDA communiquent entre eux à travers un réseau de télécommunications RT du type internet. Dans une variante, les serveurs communiquent entre eux par un réseau local ou par des lignes spécialisées. Dans une autre variante, les serveurs sont combinés en ou intégrés dans un unique serveur vocal qui est en relation avec ou qui inclut les bases de données BDV et BDA.

**Les terminaux** T1, T2, T3 et T4 communiquent avec le serveur SV à travers des réseaux d'accès respectifs RA. Selon la réalisation illustrée à la figure 1, les terminaux sont reliés à des réseaux d'accès respectifs RA par des liaisons respectives LT1, LT2, LT3, LT4.

Un terminal d'usager T1 est par exemple un terminal de radiocommunications cellulaire mobile, la liaison LT1 est un canal de radiocommunications, et le réseau d'accès respectif RA comprend le réseau fixe d'un réseau de radiocommunications, par exemple de type GSM (Global System for Mobile communications) avec un service GPRS (General Packet Radio Service), ou de type UMTS (Universal Mobile Telecommunications System).

Selon un autre exemple, un terminal d'usager T2 est un ordinateur personnel relié directement par modem à la liaison LT2 de type xDSL (Digital Subscriber Line) ou RNIS (Réseau Numérique à Intégration de Services) reliée au réseau d'accès RA correspondant.

Selon encore un autre exemple, un terminal d'usager T3 est un terminal fixe de télécommunications, la liaison LT3 est une ligne téléphonique et le réseau d'accès respectif RA comprend un réseau téléphonique commuté.

Selon d'autres exemples, un terminal d'usager T4 comprend un dispositif ou objet électronique de télécommunications qui est personnel à l'usager et qui peut être un assistant numérique personnel communicant PDA, ou un téléphone intelligent (SmartPhone). Plus généralement, le terminal T1, T2, T3, T4 peut être tout autre terminal domestique communicant portable ou non tel qu'une console de jeux vidéo, ou un récepteur de télévision intelligent coopérant avec une télécommande à afficheur, ou un clavier alphanumérique servant également de souris à travers une liaison infrarouge.

Les terminaux d'usager T1, T2, T3 et T4 et les réseaux d'accès RA ne sont pas limités aux exemples ci-dessus et peuvent être constitués par d'autres terminaux et réseaux d'accès connus. Les terminaux d'usager sont désignés indifféremment par T dans la suite de la description.

Le **serveur vocal** SV est un serveur vocal interactif classique comprenant notamment une unité de traitement centrale UC, un module d'identification MID, un module de détermination de commande MDC, un module de gestion de traitements de message d'usager MGT, un moteur de reconnaissance vocale MRV, un synthétiseur vocal SY, un analyseur linguistique AL, un serveur HTTP (HyperText Transfer Protocol) SH, un interpréteur VXML (Voice eXtensible Markup Language) IV et un interpréteur DTMF (Dual Tone MultiFrequency) DT.

La base de données vocales BDV est liée au serveur vocal SV, c'est-à-dire elle est soit intégrée dans le serveur vocal SV, soit incorporée dans un serveur de gestion de base de données et reliée au serveur vocal par une liaison locale ou distante. La base de données BDV comprend notamment des informations nécessaires au traitement de la parole telles que des lexiques de mots, des règles grammaticales et des informations nécessaires à la réalisation de l'invention telles que des identificateurs de terminaux d'usager.

Le **serveur vocal** SV dispense auprès d'un terminal d'usager T un service vocal interactif au cours duquel l'usager du terminal T interagit et dialogue avec le serveur vocal. Par exemple, le service vocal est un service de recherche de restaurants, un service boursier, un service de réservation de billets de spectacle, un service d'informations sur des salles de cinéma.

Le service vocal est implémenté essentiellement dans le serveur applicatif SA et utilise des fonctionnalités du serveur vocal SV, telles que la reconnaissance vocale et la synthèse vocale.

Dans la suite de la description, un **message vocal** MV est un message transmis depuis le serveur vocal SV vers le terminal d'usager T. Un **message d'usager** MU est un message transmis depuis le terminal d'usager T vers le serveur vocal SV. Un message vocal comprend des données vocales, tandis qu'un message d'usager comprend soit des données vocales soit une signalisation à deux fréquences vocales DTMF (Dual Tone Multiple Frequency). Dans le dernier cas, le message d'usager est considéré comme un message de signalisation DTMF.

Le **serveur applicatif SA** est généralement un serveur échangeant des requêtes et des pages VXML avec le serveur HTTP du serveur vocal SV selon le protocole de transport HTTP. Toutefois, en pratique, le serveur applicatif SA présente d'autres applications que l'application pour le service vocal selon l'invention afin d'offrir des services accessibles depuis divers terminaux présentant par exemple un navigateur web pour des terminaux fixes ou un navigateur WAP pour des terminaux mobiles.

Généralement, le service vocal est constitué par un enchaînement de pages écrites dans le langage VXML, d'une manière analogue à celui de pages HTML (HyperText Markup Language) dans un serveur de site web classique. Les pages VXML sont ensuite interprétées par l'interpréteur VXML IV dans le serveur vocal SV de manière à les transformer en des réponses vocales en tant que données à inclure dans des messages vocaux MV en fonction de questions d'usager incluses dans des messages d'usager MU.

Classiquement, le serveur applicatif SA est relié à la base de données applicatives BDA ou à un serveur de gestion de base de données applicatives dans laquelle ou lequel des informations spécifiques au service vocal sont mémorisées. Dans une variante, des informations nécessaires à la réalisation de l'invention sont mémorisées dans la base de données BDA du serveur applicatif SA.

A l'initialisation du service vocal, le module d'identification MID du serveur vocal SV identifie le terminal d'usager T par un **identificateur de terminal** IDT. L'identificateur de terminal est mémorisé dans la base BDV et conservé tout au long du service dispensé par le serveur vocal SV au terminal T, c'est-à-dire pendant la session du terminal d'usager T avec le serveur vocal pour le service dispensé. Par exemple, l'identification est basée sur le numéro téléphonique MSISDN (Mobile Station ISDN Number) du terminal mobile de l'usager, comme pour le service CLIP (Calling Line Identification Presentation) d'indication du numéro de l'appelant lors d'un appel. L'identificateur IDT identifie le terminal T pendant la session avec le serveur vocal SV.

Un **identificateur d'usager** IDU mémorisé dans la base BDV identifie l'usager du terminal T pendant la session du terminal d'usager avec le serveur vocal SV, mais aussi pendant d'autres sessions du terminal d'usager avec le serveur vocal SV. Un identificateur d'usager est indépendant du terminal et est mémorisé dans la base BDV. Par exemple, pour attribuer un identificateur d'usager, l'usager doit préalablement s'abonner ou s'inscrire auprès du serveur vocal SV au moins pour le service vocal considéré, afin d'obtenir des codes d'identification associés à un identificateur d'usager. Les codes d'identification, tels qu'un identifiant et un mot de passe, sont saisis au clavier du terminal d'usager ou prononcé devant le terminal par l'usager afin que le module d'identification MID procède à l'identification de l'usager.

Un **indicateur de mise en pause** IDMP mémorisé en correspondance à un identificateur de terminal IDT dans la base de données vocales BDV indique si le service vocal est mis en pause pour le terminal identifié par l'identificateur de terminal. Un premier état logique "0" de l'indicateur de mise en pause signifie que le service vocal est dispensé et des traitements de signaux vocaux transmis par le terminal d'usager, y compris des messages d'usager MU, sont activés dans le serveur vocal SV. Un deuxième état logique "1" de l'indicateur signifie que le service vocal est en pause et les traitements de signaux vocaux reçus par le serveur vocal SV, comme des bruits fortuits et des paroles locales non destinées au serveur vocal, sont inhibés dans le serveur vocal.

Des **données vocales** DV sont des données vocales incluses dans des messages vocaux MV au cours du service vocal dispensé par le serveur SV. Les données vocales proviennent généralement de la synthèse vocale d'un texte élaboré à partir de données mémorisées dans la base de données applicatives BDA. Une mémorisation de données vocales est une mémorisation de représentation numérique de données vocales ou une mémorisation de données textuelles dont la synthèse vocale correspond aux données vocales. Une donnée vocale à mémoriser est une donnée qui a été présentée vocalement par le serveur vocal SV à un terminal d'usager T et que l'usager souhaite conserver pendant la durée du service vocal ou pour une autre session avec le serveur vocal. Une donnée vocale à écouter est une donnée vocale ayant été préalablement mémorisée en correspondance avec un identificateur de terminal ou un identificateur d'usager par le serveur vocal SV.

Dans une variante, les données vocales sont mémorisées dans la base de données applicatives BDA par l'intermédiaire des serveurs SV et SA.

Une **commande** selon l'invention est déterminée en fonction d'un message d'usager MU. Une commande est une action ou un traitement du type mémoriser des données, revenir à un menu, valider une réponse du serveur vocal, réécouter une réponse du serveur vocal, mettre en pause le service, ou reprendre le service.

Une commande peut être une commande vocale déterminée par la détection d'un mot clé ou une expression spécifique inclus directement dans le texte obtenu par reconnaissance vocale d'un message d'usager et associé à la commande. La détection d'un mot clé ou d'une expression spécifique comporte souvent une analyse du texte obtenu après une reconnaissance vocale du message d'usager dans le moteur MRV. Le texte obtenu est analysé par l'analyseur AL. Par exemple, une commande vocale de mémorisation CM est déterminée selon le message d'usager vocal "mémoriser ce que vous m'avez dit" grâce à la détection du mot clé "mémorisation" qui est associé à la commande de mémorisation. Dans un autre exemple, une commande vocale d'écoute CE est déterminée selon le message d'usager vocal "écouter mes données" grâce à la détection du mot clé "écouter" qui est associé à la commande d'écoute. Selon un autre exemple, une commande vocale de mise en pause CMP est déterminée selon le message d'usager "mets-toi en pause" grâce à la détection du mot clé "pause" qui est associé à la commande vocale de mise en pause.

Une commande peut être une commande vocale qui n'est pas directement déterminée en fonction d'un mot ou d'une expression mais qui est déduite du texte obtenu par la reconnaissance vocale d'un message d'usager vocal dans le moteur MRV. Par exemple, une commande vocale de mémorisation est déduite du message d'usager vocal "conserve les restaurants énoncés" en réalisant notamment dans l'analyseur AL une analyse linguistique du texte obtenu après une reconnaissance vocale du message d'usager et une analogie entre le terme "conserve" et le terme "enregistrer" qui est associé à la commande vocale de mémorisation. Selon un autre exemple, une commande vocale de mise en pause est déduite du message d'usager "arrête le dialogue" en réalisant notamment dans l'analyseur AL une analyse linguistique du texte obtenu après une reconnaissance vocale du message d'usager et une analogie entre le terme "arrête" et le terme "pause" qui est associé à la commande vocale de mise en pause.

Une commande peut être une commande DTMF définie par une double tonalité associée à une touche et incluse dans un message d'usager qui est un message de signalisation DTMF. Une commande DTMF est déterminée par l'interpréteur DTMF du serveur vocal SV. Une double tonalité est générée dans le terminal et incluse dans un message d'usager MU suite à une activation d'une touche du clavier du terminal d'usager T. Par exemple, la double tonalité correspondant à l'activation de la touche "2" et transmise dans un message de signalisation DTMF en tant que message d'usager est associée à une commande de validation.

L'unité centrale UC du serveur vocal SV commande une mémorisation de données vocales dans la base de données vocales BDV en réponse à une **commande de mémorisation** CM déterminée en fonction d'un message d'usager, ou une écoute de données vocales mémorisées en réponse à une **commande d'écoute** CE déterminée en fonction d'un message d'usager, ou bien encore une suppression de données vocales mémorisées en réponse à une **commande de suppression** déterminée en fonction d'un message d'usager. Ces diverses commandes sont établies dans le serveur SV grâce à l'interprétation de données comme des questions d'usager incluses dans des messages d'usager.

Un **indicateur de données à mémoriser** est une commande indiquant ou faisant référence à au moins une donnée vocale susceptible d'être mémorisée par l'intermédiaire du serveur vocal SV. Un indicateur de données à mémoriser est déterminé selon un message d'usager lorsqu'une commande de mémorisation a déjà été déterminée à partir du message d'usager. Par exemple, un indicateur de données à mémoriser est déterminé en fonction du message d'usager vocal "mémoriser les adresses des deux premiers restaurants" grâce à la détermination d'une commande de mémorisation s'appuyant sur le mot clé "mémoriser" et grâce à la relation analysée entre l'expression "adresses des deux premiers restaurants" et des données vocales correspondantes. Par exemple, un indicateur de données à mémoriser est déterminé à partir du message d'usager vocal "enregistrer l'analyse technique de l'action France Télécom (marque déposée)" grâce à la détermination d'une commande de mémorisation s'appuyant sur le mot clé "enregistrer" et grâce à la relation analysée entre l'expression "analyse technique de l'action France Télécom (marque déposée)" et une donnée vocale correspondante.

Un **indicateur de données mémorisées à écouter** est une commande indiquant ou faisant référence à au moins une donnée vocale ayant été préalablement mémorisée en correspondance avec un identificateur de terminal ou un identificateur d'usager et susceptible d'être de nouveau reproduite dans le terminal T afin que l'usager l'écoute. Un indicateur de données à écouter est déterminé selon un message d'usager lorsqu'une commande d'écoute a déjà été déterminée en fonction du message d'usager. Par exemple, un indicateur de données mémorisées à écouter est déterminé à partir du message d'usager vocal "écouter les cours de bourse que j'ai mémorisé ?" grâce à la détermination d'une commande d'écoute s'appuyant sur le mot clé "écouter" et grâce à la relation analysée entre l'expression "les cours de bourse" et les données vocales correspondantes mémorisées préalablement. Par exemple, un indicateur de données mémorisées à écouter est déterminé à partir du message d'usager vocal "rappelez moi les adresses des trois derniers restaurants mémorisés" grâce à la détermination d'une commande d'écoute déduite de l'analyse de l'expression "rappelez moi" et grâce à la relation analysée entre l'expression "les adresses des trois derniers restaurants mémorisés" et les données vocales correspondantes mémorisées préalablement.

Par ailleurs, l'unité centrale UC du serveur vocal SV commande une mise en pause du service vocal en réponse à une **commande de mise en pause** CMP déterminée en fonction d'un message d'usager.

L'unité centrale UC du serveur vocal SV commande une reprise de service du service vocal en réponse à une **commande de reprise de service** CRS détectée dans un message d'usager. Plus précisément, une commande de reprise de service est incluse mais non déduite d'un message d'usager. Par exemple, une commande de reprise de service est détectée dans un message vocal d'usager "arrête la pause" ou "reprise du dialogue", ou selon un message d'usager comprenant une commande DTMF relative à la reprise du service vocal. De préférence, la commande de reprise de service est unique, et correspond par exemple à l'expression spécifique "arrête la pause".

Ces diverses commandes sont établies dans le serveur SV grâce à l'interprétation de données comme des questions d'usager incluses dans des messages d'usager.

Lorsque le message d'usager est un message de signalisation DTMF, la double tonalité de la touche sollicitée par l'usager suffit au serveur vocal SV pour déterminer s'il s'agit d'une commande de mise en pause ou d'une commande de reprise de service.

Des **traitements** de signaux vocaux réalisés par le serveur vocal SV correspondent aux différentes actions effectuées par le moteur de reconnaissance vocale MRV, l'analyseur linguistique AL et le module de détermination de commandes MDC, pour déterminer une commande en fonction d'un message d'usager. Les signaux vocaux susceptibles d'être traités sont ceux captés par le microphone du terminal dans une bande prédéterminée de fréquences vocales et transmis par le terminal T. Les signaux vocaux comprennent tout particulièrement les messages d'usager MU qu'ils soient de parole ou de signalisation, ainsi que tout bruit de fond y compris d'éventuels dialogues non destinés au serveur SV entre des locuteurs devant le terminal T.

Lorsque les traitements de signaux vocaux sont dits activés, le moteur de reconnaissance vocale MRV détecte des mots inclus dans le message d'usager à partir de lexiques de mots de la base de données vocales BDV. Les mots détectés sont analysés et interprétés par l'analyseur linguistique AL qui en déduit des expressions d'analyse. Lesdites expressions d'analyse sont comparées à des commandes prémémorisées dans la base de données BDV par le module de détermination de commandes MDC.

Lorsque les traitements de signaux vocaux sont dits inhibés, le moteur de reconnaissance vocale MRV détecte des mots inclus dans le message d'usager à partir d'un lexique réduit de mots de la base de données vocales BDV. Ledit lexique réduit comprend quelques mots correspondant à la commande de reprise de service. Par exemple, si la commande de reprise de service est "arrête la pause", les mots du lexique réduit sont "arrête", "la" et "pause". Les mots détectés sont analysés par l'analyseur linguistique AL qui en déduit une expression d'analyse qui correspond à la juxtaposition des mots détectés et qui est comparée à la commande de reprise de service par le module de détermination de commandes MDC. L'ordre des mots détectés doit correspondre exactement à celui des mots de la commande de reprise de service pour que celle-ci soit considérée comme détectée. Par exemple, la commande de reprise de service n'est pas détectée dans le message d'usager "pause arrêtée".

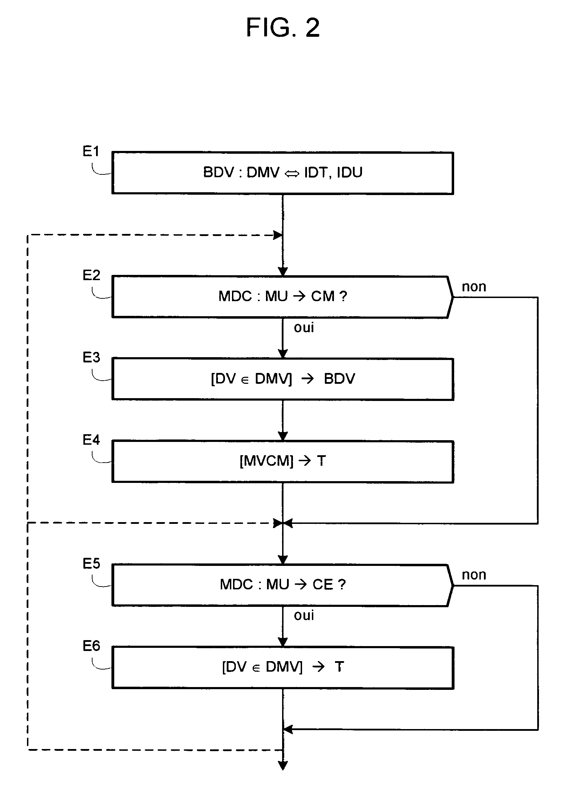

En référence à la figure 2, le **procédé** pour mémoriser des données transmises à un terminal d'usager T par un serveur vocal SV dispensant un service interactif selon une première réalisation de l'invention comprend six étapes E1 à E6 exécutées automatiquement dans le serveur vocal SV.

A l'étape E1, après une connexion du terminal d'usager T au serveur vocal SV, le module d'identification MID identifie le terminal d'usager T par un identificateur de terminal IDT. L'identificateur de terminal est mémorisé temporairement dans la base de données BDV. Suite à l'identification du terminal d'usager T, le serveur vocal SV transmet un message vocal d'accueil au service vers le terminal d'usager. Par exemple, le message d'accueil indique à l'usager les consignes pour commander une mémorisation de données vocales et écouter des données vocales mémorisées à l'aide de la voix ou du clavier du terminal. Le texte d'accueil est prémémorisé dans la base de données vocales BDV, synthétisé par le synthétiseur vocal SY, puis transmis par le serveur vocal SV dans des messages vocaux MV.

Puis le service vocal proprement dit débute, ainsi que l'interaction entre le terminal T et le serveur SA. Le serveur vocal SV transmet une succession d'un ou de plusieurs messages vocaux MV,... DMV au terminal d'usager T, et le terminal d'usager T transmet un ou plusieurs messages d'usager MU comprenant des données de parole de l'usager du terminal en réponse à la succession de messages vocaux MV. Le dernier DMV des messages vocaux transmis MV est mémorisé temporairement par le serveur vocal dans la base de données BDV en correspondance avec l'identificateur de terminal IDT, et/ou l'identificateur d'usager IDU, avant d'être écrasé par un autre dernier message vocal d'une succession plus récente d'un ou de plusieurs messages vocaux. Dans une variante, une référence au texte qui a été synthétisé avant d'être incorporé dans un message vocal MV est mémorisée en correspondance avec l'identificateur de terminal.

A l'étape E2, pour chacun des messages d'usager MU transmis au serveur vocal SV, l'analyseur linguistique AL analyse le message d'usager transmis afin qu'en fonction de celui-ci le module de détermination de commande MDC tente de déterminer une commande de mémorisation CM.

A l'étape E3, l'unité centrale UC commande dans la base de données BDV la mémorisation des données vocales DV d'un dernier message vocal DMV transmis préalablement par le serveur SV au terminal d'usager T, en correspondance avec l'identificateur de terminal IDT, et/ou l'identificateur d'usager IDU, si une commande de mémorisation CM est déterminée à l'étape E2. Les données vocales mémorisées sont conservées pendant la durée de connexion du terminal d'usager T avec le serveur vocal SV.

Puis à l'étape E4, sous la commande de l'unité centrale UC le synthétiseur vocal SY établit un message vocal de confirmation MVCM qui confirme la mémorisation des données et qui est transmis par le serveur SV au terminal d'usager T lorsque les données vocales du dernier message vocal DMV ont été mémorisées.

Ainsi, le serveur vocal SV traite chacun des messages d'usager et l'usager peut commander une mémorisation de données de dernier message vocal DMV tout au long de l'interaction entre le serveur vocal SV et le terminal T.

Qu'il y ait eu ou non une détermination de commande de mémorisation CM à l'étape E2, à l'étape E5 le module de détermination de commande MDC détermine pour chacun des messages d'usager MU transmis par le terminal d'usager T au serveur vocal SV, une commande d'écoute CE de données mémorisées en fonction du message d'usager. La détermination d'une commande d'écoute est identique à la détermination d'une commande de mémorisation. Ainsi, les étapes E2 et E5 sont réalisées sensiblement en même temps. Dans une variante, l'étape E5 est exécutée seulement lorsqu'au moins une donnée vocale DV a été préalablement mémorisée à l'étape E3.

A l'étape E6, l'unité centrale UC transmet un message vocal MV incluant les données vocales DV mémorisées du dernier message vocal DMV, s'il existe, qui sont lues en correspondance avec l'identificateur de terminal IDT dans la base BDV, si la commande d'écoute CE est déterminée à l'étape E5. Dans cette première réalisation, seules les données vocales mémorisées DV du dernier message vocal sont envoyées au terminal d'usager T.

Dans une variante, l'unité centrale UC du serveur SV transmet au terminal d'usager T un message vocal incluant toutes les données vocales, ou les données vocales de K derniers messages vocaux, K étant un entier naturel prédéterminé, qui ont été déjà transmises au terminal T et qui ont été mémorisées dans la base BDV en correspondance avec l'identificateur de terminal IDT, si la commande d'écoute CE est déterminée. Une commande précisant que l'usager souhaite écouter l'ensemble des données vocales mémorisées en correspondance avec l'identificateur de son terminal peut être associée à des mots clés du type "tout". Par exemple, l'usager prononce "écouter tout". Par exemple, une commande précisant que l'usager souhaite écouter les données vocales des quatre derniers messages mémorisées en correspondance avec l'identificateur de son terminal est "écouter les quatre derniers messages".

Les étapes E2 à E4 et les étapes E5 et E6 peuvent être effectuées plusieurs fois au cours du dialogue entre le terminal et le serveur pendant le déroulement du service interactif, comme indiqué en traits pointillés à la figure 2.

Dans une deuxième réalisation, plus complexe que la première réalisation, une commande de mémorisation est associée à un indicateur de données à mémoriser et une commande d'écoute est associée à un indicateur de données mémorisées à écouter.

Pour chacun des messages d'usager MU transmis par le terminal d'usager T au serveur SV, le module de détermination de commande MDC détermine un indicateur de données à mémoriser en fonction du message d'usager MV. De préférence, la détermination d'un indicateur de données à mémoriser est réalisée seulement pour des messages d'usager dont une commande de mémorisation a déjà été déterminée. L'unité centrale UC mémorise, en correspondance avec l'identificateur de terminal IDT ou d'usager IDU, au moins une donnée identifiée par l'indicateur de données à mémoriser déterminé. L'étape E3 de mémorisation des données vocales DV du dernier message vocal transmis est réalisée en outre si aucun indicateur de données à mémoriser n'est déterminé.

D'autre part, pour chacun des messages d'usager MU transmis par le terminal d'usager T au serveur vocal, le module de détermination MDC détermine un indicateur de données mémorisées à écouter en fonction du message d'usager. De préférence, la détermination d'un indicateur de données mémorisées à écouter est réalisée seulement pour des messages d'usager dont une commande de mémorisation a déjà été déterminée. L'unité centrale UC transmet au terminal d'usager T un message vocal incluant les données mémorisées correspondant à l'indicateur de données mémorisées à écouter déterminé et à l'identificateur de terminal IDT ou d'usager IDU. L'étape E6 de transmettre un message vocal incluant les données vocales mémorisées du dernier message vocal DMV est réalisée en outre si aucun indicateur de données mémorisées à écouter n'est déterminé.

La détermination d'un indicateur de données est plus complexe que la détermination d'une commande de mémorisation ou d'écoute. En effet, l'usager du terminal est susceptible d'employer n'importe quel mot et tournure de phrase pour préciser les données qu'il souhaite mémoriser. Pour faciliter la détermination d'indicateur, le module de détermination MDC cherche notamment à lier des parties du texte reconnues vocalement dans le message d'usager aux données qui ont été mémorisées dans la base de données BDV en correspondance avec l'identificateur de terminal IDT.

Pour un message d'usager donné, toutes les étapes de détermination de commande sont exécutées sensiblement en même temps.

Lorsque seul le terminal d'usager T est identifié, les données vocales mémorisées sont supprimées de la base de données BDV dès que le service vocal interactif entre le serveur vocal SV et le terminal d'usager T est interrompu.

Lorsque l'usager est identifié par défaut, les données vocales mémorisées sont conservées en correspondance avec l'identificateur d'usager dans la base BDV pour un usage ultérieur du service par l'usager du terminal.

Dans une variante, lorsque l'usager du terminal est identifié et que celui-ci a commandé une mémorisation de données vocales, le serveur vocal SV invite l'usager à choisir entre une mémorisation temporaire, c'est-à-dire une mémorisation des données seulement pendant la durée de la session, et une mémorisation des données persistante pendant une ou plusieurs sessions ultérieures. Les données peuvent être supprimées dans la base BDV par une commande de suppression déterminée par le module de détermination de commande MDC du serveur vocal SV en fonction du message d'usager transmis, ou après une temporisation succédant à une dernière session.

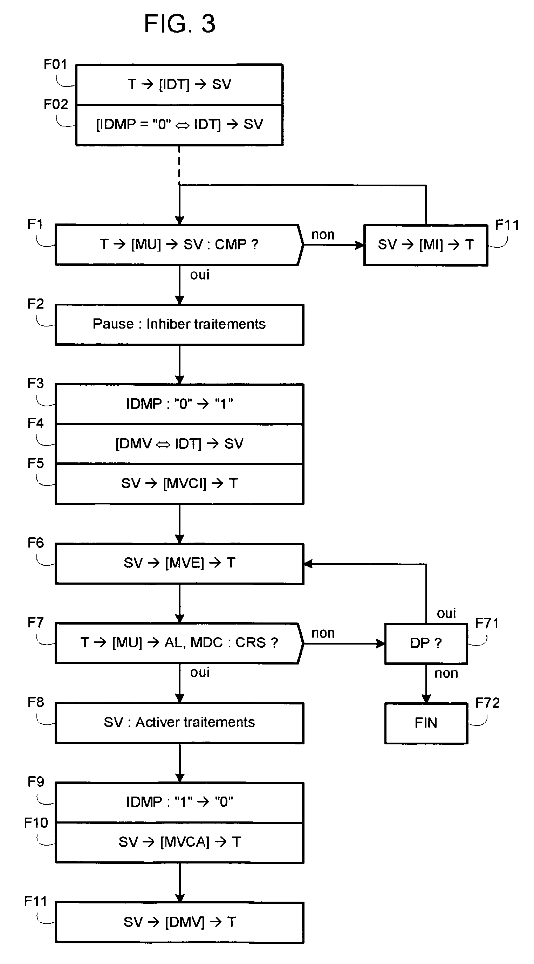

En référence à la **figure 3****,** le procédé de l'invention selon une troisième réalisation comprend en outre une mise en pause puis une reprise d'un service vocal interactif dispensé par le serveur vocal SV selon des étapes F1 à F11 exécutées automatiquement dans le serveur vocal SV, précédées d'étapes préliminaires F01 et F02.

A l'étape F01, le terminal d'usager T se connecte au serveur vocal SV et le module d'identification MID identifie le terminal d'usager par un identificateur de terminal IDT, qui est mémorisé dans la base de données vocales BDV.

A l'étape F02, l'unité centrale UC mémorise un indicateur de mise en pause IDMP à un premier état logique "0" en correspondance avec l'identificateur de terminal IDT dans la base de données vocale BDV, afin d'identifier le terminal T pour lequel le service vocal sera éventuellement mis en pause puis repris.

Le serveur vocal SV transmet alors des messages vocaux MV au terminal d'usager T qui transmet en réponse aux messages vocaux des messages d'usager MU. L'interaction entre le serveur SV et le terminal T débute par la transmission d'un message vocal d'accueil du serveur au terminal. Le message d'accueil est formulé par le synthétiseur vocal SY à partir d'un texte d'accueil prémémorisé dans la base de données vocales BDV. Le service vocal commence alors, les traitements de messages d'usager étant initialement activés par défaut dans le module de gestion de traitements MGT. De préférence chaque message vocal MV transmis au terminal T est mémorisé temporairement dans la base de données BDV en correspondance avec l'identificateur de terminal IDT.

A l'étape F1, chaque message d'usager MU transmis par le terminal d'usager T au serveur vocal SV est traité par le serveur vocal SV. L'analyseur linguistique AL analyse le message d'usager transmis MU afin qu'en fonction de celui-ci le module de détermination de commandes MDC tente de déterminer une commande de mise en pause CMP.

Lorsqu'une commande de mise en pause CMP n'est pas déterminée, l'étape F1 est répétée. Un message d'information MI est transmis au terminal d'usager T, comme indiqué à une étape F11. Par exemple, le message d'information MI indique l'intérêt et des consignes pour mettre en pause le service vocal. Dans un autre exemple, le message MI indique à l'usager différentes possibilités de réponses lorsque le message d'usager MU précédemment transmis par le terminal T et reçu par le serveur SV n'a pas été interprété par l'analyseur AL.

A l'étape F2, si une commande de mise en pause CMP est déterminée, le module de gestion de traitements MGT inhibe des traitements, comme une interprétation, de tout message d'usager transmis par le terminal d'usager T qui n'engendrent pas une commande de reprise de service CRS. Ainsi, l'analyseur linguistique AL analyse mais n'interprète aucun message d'usager MU transmis par le terminal d'usager à l'exception d'un message d'usager MU comprenant une commande de reprise de service CRS détectée par le moteur MRV et le module de détermination de commandes MDC. Tant qu'aucune commande de reprise de service n'a été détectée à la suite de la détermination de la commande de mise en pause, le serveur est muet et ne transmet aucun message vocal MV au terminal T, à l'exception de messages MVCI et MVE définis ci-après.

Le message vocal MV transmis par le serveur SV au terminal T est considéré comme un dernier message vocal DMV s'il précède le message d'usager MU à partir duquel la commande de mise en pause CMP a été déterminée et comprend des informations de réponse attendues par l'usager pour le déroulement du dialogue. En d'autres termes, le dernier message vocal DMV n'est pas un message d'erreur ou un message d'information.

De préférence, le message d'usager MU est un message vocal, c'est-à-dire comprend des données vocales, l'usager n'étant pas contraint d'avoir les mains libres pour utiliser des touches du clavier du terminal pour des messages d'usager comprenant une signalisation à fréquences vocales DTMF.

A l'étape F3, si une commande de mise en pause CMP est déterminée, l'unité centrale UC met l'indicateur de mise en pause IDMP au deuxième état logique "1", pour indiquer à l'analyseur linguistique AL qu'il doit cesser toute interprétation de message d'usager à l'exception d'un message d'usager MU engendrant une commande de reprise de service, le service vocal étant alors en pause pour le terminal d'usager T.

A l'état de pause (stand by), le serveur vocal SV n'interprète aucun message d'usager qui pourrait être inclus fortuitement notamment en bruit de fond au cours d'une conversation entre plusieurs locuteurs et l'usager près du microphone du terminal T.

En variante, l'étape F3 précède l'étape F2 ou les étapes F2 et F3 sont exécutées simultanément.

A l'étape F4, l'unité centrale UC mémorise le dernier message vocal DMV transmis par le serveur vocal SV au terminal d'usager T avant l'étape d'inhiber, en correspondance avec l'identificateur de terminal IDT, dans la base de données vocales BDV.

En variante, l'unité centrale UC mémorise aussi un nombre déterminé de messages vocaux MV précédant le dernier message vocal DMV, afin de reprendre le dialogue de manière optimale, par exemple pour rappeler le contexte du dialogue à l'usager.

A l'étape F5, sous la commande de l'unité centrale UC le synthétiseur vocal SY établit un message vocal de confirmation MVCI pour confirmer l'inhibition des traitements de message d'usager réalisés par le serveur vocal, et le serveur SV transmet le message MVCI au terminal d'usager T.

A l'étape F6, sous la commande de l'unité centrale UC le synthétiseur vocal SY établit un message vocal d'explication MVE pour fournir des explications à l'usager relatives à la commande de reprise de service, et le serveur SV transmet le message MVE au terminal d'usager T. L'usager est ainsi informé sur la manière de reprendre le dialogue.

Aux étapes F5 et F6, le synthétiseur vocal SY établit les messages MVCI et MVE à partir de textes prémémorisés dans la base de données vocales BDV.

En variante, le message MVE est transmis au terminal d'usager T automatiquement après la transmission du message MVCI, puis à chaque expiration d'une période prédéterminée tant que le serveur vocal SV ne reçoit aucun message d'usager MU transmis par le terminal d'usager T.

A l'étape F7, à la réception de chacun des messages d'usager MU transmis par le terminal d'usager T au serveur vocal SV après l'étape d'inhiber, l'analyseur linguistique AL analyse le message transmis et le module de détermination de commandes MDC détecte la commande de reprise de service CRS lorsque le message d'usager MU transmis contient l'expression spécifique définie précédemment. Les traitements, en particulier l'interprétation de message d'usager, réalisés par le serveur étant inhibés, des fonctionnalités du service vocal relatives au terminal d'usager T sont réduites ce qui libère des ressources au serveur vocal pour l'interaction avec d'autres terminaux d'usager connectés au serveur vocal.

A l'étape F8, lorsque la commande de reprise de service CRS est détectée, le module de gestion de traitements MGT active les traitements, en particulier l'interprétation de message d'usager, réalisés par le serveur SV afin de transmettre un ou plusieurs messages vocaux au terminal d'usager T. Le service vocal est alors repris pour continuer le dialogue entre le serveur vocal SV et le terminal d'usager T.

Si la commande de reprise de service CRS n'est pas détectée à l'étape F7, l'étape F6 est répétée.

Si la commande de reprise de service CRS n'est toujours pas détectée après une durée prédéfinie DP à une étape F71, le serveur vocal SV met fin au service vocal en déconnectant le terminal d'usager T, comme indiqué à une étape F72, afin d'éviter par exemple une facture téléphonique élevée en raison d'un oubli ou d'un empêchement de l'usager de continuer le dialogue.

Lorsque les traitements sont activés, les étapes suivantes F9 et F10 sont exécutées simultanément.

A l'étape F9, l'unité centrale UC met l'indicateur de mise en pause IDMP au premier état logique "0", pour indiquer que le service vocal est repris pour le terminal d'usager T.

A l'étape F10, le synthétiseur vocal SY établit un message vocal de confirmation MVCA pour confirmer l'activation des traitements de message d'usager réalisés par le serveur vocal, et l'unité centrale UC transmet le message MVCA au terminal d'usager T.

A l'étape F11, l'unité centrale UC transmet le dernier message vocal DMV qui a été mémorisé avant l'étape d'inhiber au terminal d'usager T en correspondance avec l'identificateur de terminal IDT, afin de reprendre le dialogue à l'état où il a été interrompu à la pause.

Dans une variante relative aux trois réalisations selon l'invention, une commande de mémorisation CM est déterminée à l'étape E2 en fonction d'une détermination d'une commande de mise en pause CMP dans un message d'usager MU transmis par le terminal d'usager T au serveur. Dans ce cas, la détermination de la commande de mise en pause entraîne la mémorisation des données vocales DV du dernier message vocal DMV transmis préalablement par le serveur SV au terminal d'usager T et entraîne une inhibition des traitements de tout message d'usager n'engendrant pas une commande de reprise de service CRS.

Par ailleurs, une commande d'écoute CE est déterminée à l'étape E5 en fonction d'une détection d'une commande de reprise de service CRS dans un message d'usager MU transmis par le terminal d'usager T au serveur. Dans ce cas, la détection de la commande de reprise de service entraîne l'activation des traitements de message d'usager et la transmission d'un message vocal au terminal d'usager, le message vocal incluant les données vocales DV mémorisées du dernier message vocal DMV mémorisé avant l'inhibition des traitements.

L'invention décrite ici concerne un procédé et un serveur SV, ou SV-SA, dispensant un service vocal interactif et échangeant des messages avec au moins un terminal d'usager pour mémoriser des données transmises au terminal d'usager. Selon une implémentation préférée, les étapes du procédé de l'invention sont déterminées par les instructions d'un programme d'ordinateur incorporé dans un serveur, tel que le serveur vocal SV et/ou le serveur d'application SA. Le programme comporte des instructions de programme qui, lorsque ledit programme est chargé et exécuté dans ledit serveur, dont le fonctionnement est alors commandé par l'exécution du programme, réalisent les étapes du procédé selon l'invention.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'informations peut être n'importe quelle entité ou dispositif capable de stocker le programme. Par exemple, le support peut comporter un moyen de stockage ou support d'enregistrement, tel qu'une ROM, par exemple un CD ROM ou une ROM de circuit microélectronique, ou encore une clé USB, ou un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type internet.

Alternativement, le support d'informations peut être un circuit intégré dans lequel le programme est incorporé, le circuit étant adapté pour exécuter ou pour être utilisé dans l'exécution du procédé selon l'invention.

## Revendications

1. Procédé pour mémoriser des données vocales transmises à un terminal d'usager (T) par un serveur (SV, SA) dispensant un service vocal interactif, comprenant dans le serveur une étape d'identifier (E1) le terminal d'usager par un identificateur de terminal (IDT), **caractérisé en ce qu'**il comprend dans le serveur (SV, SA) les étapes de :
déterminer (E2) une commande de mémorisation (CM) en fonction de chaque message d'usager (MU) transmis par le terminal d'usager (T) au serveur (SV, SA),
mémoriser (E3) des données d'un dernier message vocal (DMV) mémorisé et transmis préalablement au terminal d'usager (T) en correspondance avec l'identificateur de terminal (IDT) si une commande de mémorisation (CM) est déterminée,
déterminer (E5) une commande d'écoute (CE) de données mémorisées en fonction de chaque message d'usager (MU) transmis par le terminal d'usager (T) au serveur (SV, SA), et
transmettre (E6) un message vocal incluant les données mémorisées du dernier message vocal (DMV) au terminal d'usager (T) si la commande d'écoute (CL) est déterminée.

2. Procédé conforme à la revendication 1, comprenant, dans le serveur (SV, SA), pour chaque message d'usager (MU), une étape de déterminer un indicateur de données à mémoriser en fonction du message d'usager, et une étape de mémoriser au moins une donnée identifiée par l'indicateur de données à mémoriser déterminé en correspondance avec l'identificateur de terminal, l'étape de mémoriser les données du dernier message vocal transmis (DMV) étant réalisée en outre si aucun indicateur de données à mémoriser n'est déterminé.

3. Procédé conforme à la revendication 1 ou 2, comprenant une étape de transmettre (E4) un message vocal (MVCM) pour confirmer la mémorisation des données depuis le serveur (SV, SA) au terminal d'usager (T).

4. Procédé conforme à l'une quelconque des revendications 1 à 3, selon lequel le message d'usager (MU) en fonction duquel a été déterminée la commande de mémorisation est un message vocal.

5. Procédé conforme à l'une quelconque des revendications 1 à 4, selon lequel le message d'usager (MU) en fonction duquel a été déterminée la commande de mémorisation est un message de signalisation à fréquences vocales.

6. Procédé conforme à l'une quelconque des revendications 1 à 5, comprenant une étape de transmettre (E6) un message vocal (MV) incluant les données mémorisées en correspondance avec l'identificateur de terminal depuis le serveur (SV, SA) au terminal d'usager (T) si la commande d'écoute (CL) est déterminée.

7. Procédé conforme à l'une quelconque des revendications 1 à 6, comprenant, dans le serveur (SV, SA), pour chaque message d'usager (MU), une étape de déterminer un indicateur de données mémorisées à écouter en fonction du message d'usager et une deuxième étape de transmettre au terminal d'usager un message vocal incluant les données mémorisées correspondant à l'indicateur de données mémorisées à écouter déterminé et à l'identificateur de terminal, l'étape de transmettre (E6) le message vocal incluant les données mémorisées du dernier message vocal (DMV) étant réalisée en outre si aucun indicateur de données mémorisées à écouter n'est déterminé.

8. Procédé conforme à l'une quelconque des revendications 1 à 7, comprenant une étape d'identifier l'usager du terminal (T) par un identificateur d'usager (IDU) afin que les données soient mémorisées en correspondance avec l'identificateur d'usager.

9. Procédé conforme à l'une quelconque des revendications 1 à 8, selon lequel les données mémorisées sont supprimées dès que le service vocal interactif entre le serveur (SV, SA) et le terminal d'usager (T) est interrompu.

10. Procédé conforme à l'une quelconque des revendications 1 à 9, selon lequel une commande de mémorisation (CM) est déterminée à la suite d'une commande de mise en pause (CMP) déterminée dans ledit chaque message d'usager (MU) transmis par le terminal d'usager (T) au serveur et une commande d'écoute (CE) est déterminée à la suite d'une commande de reprise de service (CRS) détectée dans un autre message d'usager (MU) transmis par le terminal d'usager (T) au serveur.

11. Procédé conforme à la revendication 10, selon lequel la commande de mise en pause déterminée entraîne une inhibition (F2) de traitements de tout message d'usager n'engendrant pas une commande de reprise de service, et la commande de reprise de service détectée entraîne une activation (F8) des traitements de message d'usager afin de transmettre un message vocal au terminal d'usager.

12. Serveur dispensant un service interactif pour mémoriser des données vocales transmises à un terminal d'usager (T), comprenant un moyen (MID) pour identifier le terminal d'usager par un identificateur de terminal (IDT), **caractérisé en ce qu'**il comprend :
un moyen (MDC) pour déterminer une commande de mémorisation (CM) en fonction de chaque message d'usager (MU) transmis par le terminal d'usager (T) au serveur (SV, SA),
un moyen (UC) pour mémoriser des données d'un dernier message vocal (DMV) mémorisé et transmis préalablement au terminal d'usager (T) en correspondance avec l'identificateur de terminal (IDT) si une commande de mémorisation (CM) est déterminée,
un moyen (MDC) pour déterminer une commande d'écoute (CE) de données mémorisées en fonction de chaque message d'usager (MU) transmis par le terminal d'usager (T) au serveur (SV, SA), et
un moyen (UC) pour transmettre un message vocal incluant les données mémorisées du dernier message vocal (DMV) au terminal d'usager (T) si la commande d'écoute (CL) est déterminée.

13. Programme d'ordinateur apte à être mis en oeuvre dans un serveur (SV, SA) dispensant un service vocal interactif pour mémoriser des données vocales transmises à un terminal d'usager (T) par ledit serveur, ledit programme caracterisé en comprenant des instructions qui, lorsque le programme est chargé et exécuté dans ledit serveur, réalisent les étapes de:
identifier (E1) le terminal d'usager par un identificateur de terminal (IDT),
déterminer (E2) une commande de mémorisation (CM) en fonction de chaque message d'usager (MU) transmis par le terminal d'usager (T) au serveur (SV, SA),
mémoriser (E3) des données d'un dernier message vocal (DMV) mémorisé et transmis préalablement au terminal d'usager (T) en correspondance avec l'identificateur de terminal (IDT) si une commande de mémorisation (CM) est déterminée,
déterminer (E5) une commande d'écoute (CE) de données mémorisées en fonction de chaque message d'usager (MU) transmis par le terminal d'usager (T) au serveur (SV, SA), et
transmettre (E6) un message vocal incluant les données mémorisées du dernier message vocal (DMV) au terminal d'usager (T) si la commande d'écoute (CL) est déterminée.

## Claims

1. Method for storing voice data transmitted to a user terminal (T) by a server (SV, SA) dispensing an interactive voice service, comprising in the server a step of identifying (E1) the user terminal by a terminal identifier (IDT), **characterized in that** it comprises in the server (SV, SA) the steps of:
determining (E2) a storage command (CM) as a function of each user message (MU) transmitted by the user terminal (T) to the server (SV, SA),
storing (E3) the data of a last voice message (DMV) stored and transmitted previously to the user terminal (T) in correspondence with the terminal identifier (IDT) if a storage command (CM) is determined,
determining (E5) a listening command (CE) for data stored as a function of each user message (MU) transmitted by the user terminal (T) to the server (SV, SA), and
transmitting (E6) a voice message including the stored data of the last voice message (DMV) to the user terminal (T) if the listening command (CL) is determined.

2. Method in accordance with Claim 1, comprising, in the server (SV, SA), for each user message (MU), a step of determining an indicator of data to be stored as a function of the user message, and a step of storing at least one item of data identified by the indicator of data to be stored determined in correspondence with the terminal identifier, the step of storing the data of the last voice message transmitted (DMV) being carried out furthermore if no indicator of data to be stored is determined.

3. Method in accordance with Claim 1 or 2, comprising a step of transmitting (E4) a voice message (MVCM) for confirming the storage of the data from the server (SV, SA) to the user terminal (T).

4. Method in accordance with any one of Claims 1 to 3, according to which the user message (MU) as a function of which the storage command has been determined is a voice message.

5. Method in accordance with any one of Claims 1 to 4, according to which the user message (MU) as a function of which the storage command has been determined is a signalling message based on voice frequencies.

6. Method in accordance with any one of Claims 1 to 5, comprising a step of transmitting (E6) a voice message (MV) including the data stored in correspondence with the terminal identifier from the server (SV, SA) to the user terminal (T) if the listening command (CL) is determined.

7. Method in accordance with any one of Claims 1 to 6, comprising, in the server (SV, SA), for each user message (MU), a step of determining an indicator of stored data to be listened to as a function of the user message and a second step of transmitting to the user terminal a voice message including the stored data corresponding to the determined indicator of stored data to be listened to and to the terminal identifier, the step of transmitting (E6) the voice message including the stored data of the last voice message (DMV) being carried out furthermore if no indicator of stored data to be listened to is determined.

8. Method in accordance with any one of Claims 1 to 7, comprising a step of identifying the user of the terminal (T) by a user identifier (IDU) so that the data are stored in correspondence with the user identifier.

9. Method in accordance with any one of Claims 1 to 8, according to which the stored data are deleted as soon as the interactive voice service between the server (SV, SA) and the user terminal (T) is interrupted.

10. Method in accordance with any one of Claims 1 to 9, according to which a storage command (CM) is determined pursuant to a pause command (CMP) determined in said each user message (MU) transmitted by the user terminal (T) to the server and a listening command (CE) is determined pursuant to a resumption of service command (CRS) detected in another user message (MU) transmitted by the user terminal (T) to the server.

11. Method in accordance with Claim 10, according to which the pause command determined brings about a prohibiting (F2) of processings of any user message not giving rise to a resumption of service command, and the resumption of service command detected brings about an activating (F8) of the user message processings so as to transmit a voice message to the user terminal.

12. Server dispensing an interactive service for storing voice data transmitted to a user terminal (T), comprising a means (MID) for identifying the user terminal by a terminal identifier (IDT), **characterized in that** it comprises:
a means (MDC) for determining a storage command (CM) as a function of each user message (MU) transmitted by the user terminal (T) to the server (SV, SA),
a means (UC) for storing the data of a last voice message (DMV) stored and transmitted previously to the user terminal (T) in correspondence with the terminal identifier (IDT) if a storage command (CM) is determined,
a means (MDC) for determining a listening command (CE) for data stored as a function of each user message (MU) transmitted by the user terminal (T) to the server (SV, SA), and
a means (UC) for transmitting a voice message including the stored data of the last voice message (DMV) to the user terminal (T) if the listening command (CE) is determined.

13. Computer program able to be implemented in a server (SV, SA) dispensing an interactive voice service for storing voice data transmitted to a user terminal (T) by said server, said program being **characterized in that** it comprises instructions which, when the program is loaded and executed in said server, carry out the steps of:
identifying (E1) the user terminal by a terminal identifier (IDT),
determining (E2) a storage command (CM) as a function of each user message (MU) transmitted by the user terminal (T) to the server (SV, SA),
storing (E3) the data of a last voice message (DMV) stored and transmitted previously to the user terminal (T) in correspondence with the terminal identifier (IDT) if a storage command (CM) is determined,
determining (E5) a listening command (CE) for data stored as a function of each user message (MU) transmitted by the user terminal (T) to the server (SV, SA), and
transmitting (E6) a voice message including the stored data of the last voice message (DMV) to the user terminal (T) if the listening command (CE) is determined.

## Patentansprüche

1. Verfahren zum Speichern von durch einen einen interaktiven Sprachdienst vermittelnden Server (SV, SA) an ein Benutzerendgerät (T) übertragenen Sprachdaten, das im Server einen Schritt des Erkennens (E1) des Benutzerendgeräts durch eine Endgerätkennung (IDT) enthält, **dadurch gekennzeichnet, dass** es im Server (SV, SA) die Schritte enthält:
Bestimmen (E2) eines Speicherbefehls (CM) abhängig von jeder von dem Benutzerendgerät (T) an den Server (SV, SA) übertragenen Benutzermitteilung (MU),
Speichern (E3) der Daten einer letzten vorher gespeicherten und an das mit der Endgerätkennung (IDT) übereinstimmende Benutzerendgerät (T) übertragenen Sprachmitteilung (DMV), wenn ein Speicherbefehl (CM) bestimmt wird,
Bestimmen (E5) eines Hörbefehls (CE) von gespeicherten Daten abhängig von jeder vom Benutzerendgerät (T) an den Server (SV, SA) übertragenen Benutzermitteilung (MU), und
Übertragen (E6) einer die gespeicherten Daten der letzten Sprachmitteilung (DMV) enthaltenden Sprachmitteilung an das Benutzerendgerät (T), wenn der Hörbefehl (CL) bestimmt wird.

2. Verfahren nach Anspruch 1, das im Server (SV, SA) für jede Benutzermitteilung (MU) einen Schritt der Bestimmung eines Anzeigers zu speichernder Daten abhängig von der Benutzermitteilung und einen Schritt des Speicherns mindestens eines von dem in Übereinstimmung mit der Endgerätkennung bestimmten Anzeiger zu speichernder Daten erkannten Datenwerts enthält, wobei der Schritt des Speicherns der Daten der letzten übertragenen Sprachmitteilung (DMV) außerdem durchgeführt wird, wenn kein Anzeiger zu speichernder Daten bestimmt ist.

3. Verfahren nach Anspruch 1 oder 2, das einen Schritt des Übertragens (E4) einer Sprachmitteilung (MVCM) vom Server (SV, SA) an das Benutzerendgerät (T) enthält, um die Speicherung der Daten zu bestätigen.

4. Verfahren nach einem der Ansprüche 1 bis 3, gemäß dem die Benutzermitteilung (MU), abhängig von der der Speicherbefehl bestimmt wurde, eine Sprachmitteilung ist.

5. Verfahren nach einem der Ansprüche 1 bis 4, gemäß dem die Benutzermitteilung (MU), abhängig von der der Speicherbefehl bestimmt wurde, eine Tonfrequenzzeichengabe ist.

6. Verfahren nach einem der Ansprüche 1 bis 5, das einen Schritt des Übertragens (E6) einer die gespeicherten Daten enthaltenden Sprachmitteilung in Übereinstimmung mit der Endgerätkennung (MV) ausgehend vom Server (SV, SA) an das Benutzerendgerät (T) enthält, wenn der Hörbefehl (CL) bestimmt wird.

7. Verfahren nach einem der Ansprüche 1 bis 6, das im Server (SV, SA) für jede Benutzermitteilung (MU) einen Schritt des Bestimmens eines Anzeigers zu hörender gespeicherter Daten abhängig von der Benutzermitteilung und einen zweiten Schritt des Übertragens einer Sprachmitteilung an das Benutzerendgerät enthält, die die gespeicherten Daten entsprechend dem bestimmten Anzeiger zu hörender gespeicherter Daten und der Endgerätkennung enthält, wobei der Schritt des Übertragens (E6) der die gespeicherten Daten der letzten Sprachmitteilung (DMV) enthaltenden Sprachmitteilung außerdem durchgeführt wird, wenn kein Anzeiger zu hörender gespeicherter Daten bestimmt ist.

8. Verfahren nach einem der Ansprüche 1 bis 7, das einen Schritt des Erkennens des Benutzers des Endgeräts (T) durch eine Benutzerkennung (IDU) enthält, damit die Daten in Übereinstimmung mit der Benutzerkennung gespeichert werden.

9. Verfahren nach einem der Ansprüche 1 bis 8, gemäß dem die gespeicherten Daten gelöscht werden, sobald der interaktive Sprachdienst zwischen dem Server (SV, SA) und dem Benutzerendgerät (T) unterbrochen wird.

10. Verfahren nach einem der Ansprüche 1 bis 9, gemäß dem ein Speicherbefehl (CM) nach einem bestimmten Pausierbefehl (CMP) in jeder vom Benutzerendgerät (T) an den Server übertragenen Benutzermitteilung (MU) bestimmt wird, und ein Hörbefehl (CE) nach einem Dienstwiederaufnahmebefehl (CRS) bestimmt wird, der in einer anderen vom Benutzerendgerät (T) an den Server übertragenen Benutzermitteilung (MU) erfasst wird.

11. Verfahren nach Anspruch 10, gemäß dem der bestimmte Pausierbefehl zu einer Sperre (F2) von Verarbeitungen jeder Benutzermitteilung führt, die keinen Dienstwiederaufnahmebefehl erzeugt, und der erfasste Dienstwiederaufnahmebefehl zu einer Aktivierung (F8) der Benutzermitteilungsverarbeitungen führt, um eine Sprachmitteilung an das Benutzerendgerät zu übertragen.

12. Server, der einen interaktiven Dienst zum Speichern von an ein Benutzerendgerät (T) übertragenen Sprachdaten vermittelt, der eine Einrichtung (MID) zur Erkennung des Benutzerendgeräts durch eine Endgerätkennung (IDT) enthält, **dadurch gekennzeichnet, dass** er enthält:
eine Einrichtung (MDC), um einen Speicherbefehl (CM) abhängig von jeder vom Benutzerendgerät (T) an den Server (SV, SA) übertragenen Benutzermitteilung (MU) zu bestimmen,
eine Einrichtung (UC), um Daten einer letzten vorher gespeicherten und an das mit der Endgerätkennung (IDT) übereinstimmende Benutzerendgerät (T) übertragenen Sprachmitteilung (DMV) zu speichern, wenn ein Speicherbefehl (CM) bestimmt wird,
eine Einrichtung (MDC), um einen Hörbefehl (CE) von gespeicherten Daten abhängig von jeder vom Benutzerendgerät (T) an den Server (SV, SA) übertragenen Benutzermitteilung (MU) zu bestimmen, und
eine Einrichtung (UC), um eine die gespeicherten Daten der letzten Sprachmitteilung (DMV) enthaltende Sprachmitteilung an das Benutzerendgerät (T) zu übertragen, wenn der Hörbefehl (CE) bestimmt wird.

13. Computerprogramm, das in einem Server (SV, SA) durchgeführt werden kann, der einen interaktiven Sprachdienst vermittelt, um Sprachdaten zu speichern, die vom Server an ein Benutzerendgerät (T) übertragen werden, wobei das Programm **dadurch gekennzeichnet ist, dass** es Anweisungen enthält, die, wenn das Programm in den Server geladen und dort ausgeführt wird, die Schritte durchführen:
Erkennen (E1) des Benutzerendgeräts durch eine Endgerätkennung (IDT),
Bestimmen (E2) eines Speicherbefehls (CM) abhängig von jeder Benutzermitteilung (MU), die vom Benutzerendgerät (T) an den Server (SV, SA) übertragen wird,
Speichern (E3) der Daten einer letzten vorher gespeicherten und an das mit der Endgerätkennung (IDT) übereinstimmende Benutzerendgerät (T) übertragenen Sprachmitteilung (DMV), wenn ein Speicherbefehl (CM) bestimmt wird,
Bestimmen (E5) eines Hörbefehls (CE) von gespeicherten Daten abhängig von jeder Benutzermitteilung (MU), die vom Benutzerendgerät (T) an den Server (SV, SA) übertragen wird, und Übertragen (E6) einer die gespeicherten Daten der letzten Sprachmitteilung (DMV) enthaltenden Sprachmitteilung an das Benutzerendgerät (T), wenn der Hörbefehl (CE) bestimmt wird.
